# EUROPEAN PATENT APPLICATION

(11) **EP 4 311 156 A1**
(43) Date of publication of application: **24.01.2024**
(21) Application number: 22185456.5
(22) Date of filing: 18.07.2022
(51) Int. Cl.: H04L 9/00

(54) **DEVICE AND METHOD FOR SECURING AND VERIFYING BUSINESS DATA VIA A BLOCKCHAIN SYSTEM**

(71) Applicant: Yeh, Wei, Taipei City 116 (TW)
(72) Inventor: YEH, Wei, Taipei City 116 (TW); HUANG, Chao-Chiu, Taipei City 106 (TW)
(74) Representative: Bobbert & Partner Patentanwälte PartmbB

(57) **Abstract**

In a blockchain system, a user device obtains an address of a smart contract according to a transaction hash, and generates a private data hash according to business data. The user device then generates a transaction based on the private data hash and the address of the smart contract, and submits the transaction to the blockchain system to store the private data hash into the smart contract, such that confidential information of a business deal in the real world is secured. On the other hand, an authentication device generates a private data hash according to business data, obtains an address of a smart contract in the blockchain system according to a transaction hash, and accesses the smart contract via the address to determine whether the private data hash is stored in the smart contract. The authentication device approves the business data when the smart contract includes the private data hash.

## Description

### BACKGROUND

### Technical Field

The present disclosure relates to a device and a method for securing and verifying business data via a blockchain system. More specifically, the present disclosure relates to a device and a method for securing and verifying business data via a blockchain system that ensure both preserving business evidence and securing the confidentialities of the same.

### Descriptions of the Related Art

Blockchains are commonly used for maintaining business records between two parties thanks to their decentralized and immutable structure, which makes it nearly impossible to falsify the records maintained therein. To utilize a blockchain for preserving business evidence, relevant information (e.g., the value of payment, destination address, and/or other information to be preserved) needs to be provided to all nodes of the blockchain system such that it is kept as a record (i.e., a block) on the blockchain, which means said information has to become public to all of the nodes.

However, there are some circumstances that the business-related information provided to the nodes are considered confidential, that is, the content of which should be only available to certain parties instead of all nodes on the blockchain. Thus, there is an urgent need in the art for a solution capable of preserving business evidence on a blockchain while still ensuring the confidentiality of the same.

### SUMMARY

To solve at least the abovementioned problem, the present disclosure provides a device for securing business data via a blockchain system. The device may comprise a storage, a transceiver electrically connected with the storage, and a processor electrically connected with the storage and the transceiver. The storage may be configured to store business data and a transaction hash. The processor may be configured to obtain an address of a smart contract in the blockchain system according to the transaction hash, generate a private data hash according to the business data, and generate a transaction based on the private data hash and the address of the smart contract. The transceiver may be configured to submit the transaction to the blockchain system to store the private data hash into the smart contract, such that confidential information of a business deal in the real world is secured by the blockchain system.

To solve at least the abovementioned problem, the present disclosure also provides a device for verifying business data via a blockchain system. The device may comprise a storage, a transceiver electrically connected with the storage, and a processor electrically connected with the storage and the transceiver. The storage may be configured to store business data and a transaction hash. The processor may be configured to generate a private data hash according to the business data and obtain an address of a smart contract in the blockchain system according to the transaction hash. The transceiver may be configured to access the smart contract via the address of the smart contract. Moreover, the processor may be further configured to determine whether the private data hash is comprised in the smart contract, and approve the business data when determining that the private data hash is stored in the smart contract, such that a business deal in the real world is verified by the blockchain system.

To solve at least the abovementioned problem, the present disclosure also provides a method for securing business data via a blockchain system. The method may comprise steps performed by an electronic device in the blockchain system as follows:
obtaining an address of a smart contract in the blockchain system according to a transaction hash;
generating a private data hash according to business data;
generating a transaction based on the private data hash and the address of the smart contract; and
submitting the transaction to the blockchain system to store the private data hash into the smart contract, such that confidential information of a business deal in the real world is secured by the blockchain system.

To solve at least the abovementioned problem, the present disclosure also provides a method for verifying business data via a blockchain system. The method may comprise steps performed by an electronic device in the blockchain system as follows:
generating a private data hash according to business data;
obtaining an address of a smart contract in the blockchain system according to a transaction hash;
accessing the smart contract via the address of the smart contract;
determining whether the private data hash is stored in the smart contract; and
approving the business data when determining that the private data hash is stored in the smart contract, such that a business deal in the real world is verified by the blockchain system.

The device and method for securing and verifying business data via a blockchain system provided by the present disclosure ensure both preserving business evidence and securing the confidentialities of the same via generating and deploying a hash of the confidential business data to the smart contract. The smart contract and the corresponding block on the blockchain do not exhibit the business data, but a piece of information that is indecipherable based on its content, and the immutable mechanism of the blockchain preserves the index to verify the business data. Therefore, a certain individual or organization is still capable of verifying the business data (i.e., to determine whether a business action/a deal actually took place in the way specified by the business data) whenever necessary, as long as he/she is provided with the business data. In view of this, the device and method for securing and verifying business data via a blockchain system provided by the present disclosure indeed solve the abovementioned problem in the art.

This summary overall describes the core concept of the present invention and covers the problem to be solved, the means to solve the problem and the effect of the present invention to provide a basic understanding of the present invention by those of ordinary skill in the art. However, it shall be appreciated that, this summary is not intended to encompass all embodiments of the present invention but is provided only to present the core concept of the present invention in a simple form and as an introduction to the following detailed description. The detailed technology and preferred embodiments implemented for the subject invention are described in the following paragraphs accompanying the appended drawings for people having ordinary skills in the art to well appreciate the features of the claimed invention.

### BRIEF DESCRIPTION OF THE DRAWINGS

The drawings can assist the description of the present disclosure, wherein:
FIG. 1 depicts a schematic view of a blockchain system according to one or more embodiments of the present disclosure;
**FIG. 2** depicts a schematic view of a process for securing business data according to one or more embodiments of the present disclosure;
**FIG. 3** depicts a schematic view of a process for verifying business data according to one or more embodiments of the present disclosure;
**FIG. 4** depicts a method for securing business data via a blockchain system according to one or more embodiments of the present disclosure; and
**FIG. 5** depicts a method for verifying business data via a blockchain system according to one or more embodiments of the present disclosure.

### DETAILED DESCRIPTION

In the following description, a device and a method for securing business data as well as a device and a method for verifying business data via a blockchain system provided by the present disclosure will be explained with reference to embodiments thereof. However, these embodiments are not intended to limit the present invention to any environment, applications, or implementations described in these embodiments. Therefore, description of these embodiments is only for purpose of illustration rather than to limit the present invention. It should be appreciated that, in the following embodiments and the attached drawings, elements unrelated to the present invention are omitted from depiction. In addition, dimensions of and dimensional scales among individual elements in the attached drawings are provided only for illustration, but not to limit the scope of the present invention.

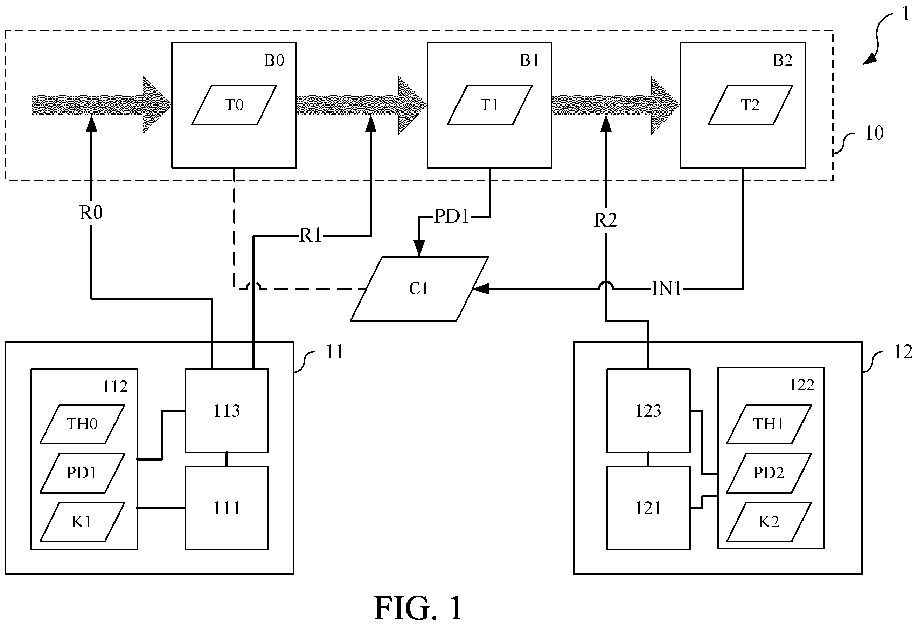

**FIG. 1** depicts a schematic view of a blockchain system according to one or more embodiments of the present disclosure. The contents shown in **FIG. 1** are only for easily illustrating the embodiments, instead of limiting the scope of the present disclosure.

Please refer to **FIG. 1****.** A blockchain system **1** may comprise a plurality of nodes which together form a decentralized peer-to-peer (P2P) network structure. The blockchain system 1 may be a network based on for example but not limited to Ethereum or other blockchain platforms that support Solidity, which is an object-oriented programming language widely used for implementing smart contracts.

By way of example, **FIG. 1** exhibits two of the plurality of nodes, i.e., electronic devices **11** and **12.** Each of the electronic devices **11** and **12** may be a device with general blockchain functionalities (e.g., storing and changing the states of a blockchain virtual machine, creating and issuing a transaction to the blockchain, deploying a smart contract, executing a specific program or function included in a smart contract, initiating and interacting with an account of the blockchain system, etc.) Those having ordinary skills in the art can directly understand the essential data, components, and/or behaviors for implementing said functionalities based on the present disclosure, and thus they will not be specifically described hereinafter.

The electronic device **11** as a whole may be configured for preserving business data with a blockchain **10,** and the electronic device **12** as a whole may be configured for verifying business data via the blockchain **10.** The electronic device **11** may comprise a processor **111,** a storage **112** electrically connected with the processor **111,** and a transceiver **113** electrically connected with the processor **111** and the storage **112.** Similarly, the electronic device **12** may comprise a processor **121,** a storage **122** electrically connected with the processor **121,** and a transceiver **123** electrically connected with the processor **121** and the storage **122.** It should be noted that the electrical connection between the aforementioned components may be direct (i.e., connected with each other without any functional components therebetween) or indirect (i.e., connected with each other through other functional components).

Each of the processors **111** and **121** may be a microprocessor or microcontroller. A microprocessor or a microcontroller is a programmable special integrated circuit that has the functions of operation, storage, output/input, etc., and can accept and process various coding instructions, thereby performing various logic operations and arithmetic operations, and outputting the corresponding operation result. The processors **111** and **121** may be programmed to execute various instructions to process data in the electronic devices **11** and **12** respectively and execute various operational procedures or programs.

The storages **112** and **122** may be configured to store data generated by the electronic devices **11** and **12** respectively, data transmitted from an external device to the electronic devices, or data input into the electronic devices by a user. Each of the storages **112** and **122** may comprise a first-level memory (also referred to as main memory or internal memory), and the corresponding processor **111** or **121** may directly read instruction sets stored in the first-level memory, and execute these instruction sets if needed. Each of the storages **112** and **122** may comprise a second-level memory (also referred to as external memory or secondary memory), and the second-level memory may transmit the stored data to the first-level memory through the data buffer. For example, the secondary memory may for example be a hard disk, a compact disk, or the like, without being limited thereto. Each of the storages **112** and **122** may comprise a third-level memory (i.e., a storage device that can be inserted into or pulled out from a computer directly (e.g., a mobile disk)).

As shown in **FIG. 1****,** the storage **112** may store business data **PD1,** and the storage **122** may store business data **PD2.** Each of the business data **PD1** and **PD2** may be data related to a business action (e.g., a payment) of a user. Said business action may be a transaction of cryptocurrencies between two accounts of the blockchain system **1,** whereas in some embodiments, said business action may also be a transaction of real-world currencies such as USD, RMB, EUR, etc. To be more specific, the business data **PD1** and **PD2** may comprise information related to, for example, the identity of the participant of a business deal (e.g., the personal ID number, the tax ID number or a registration number of a company, etc.), an invoice, a delivery order, a shipment, a certificate of origin, and/or any other items that are involved in different stages of a business deal. Accordingly, the business data **PD1** and **PD2** may comprise a text, an image, an audio, a video, and/or any other formats corresponding to the business action. The business data **PD1** and **PD2** may be served as a proof of trading, and thus are helpful when checking whether a business action actually took place as alleged.

Each of the transceivers **113** and **123** may be configured to perform wired or wireless communication with other devices outside. Taking wireless communication as an example, the transceivers **113** and **123** may comprise, but is not limited to, an antenna, an amplifier, a modulator, a demodulator, a detector, an analog-to-digital converter, a digital-to-analog converter, or other communication elements. Taking wired communication as an example, the transceivers **113** and **123** may be, for example but not limited to, a gigabit Ethernet transceiver, a gigabit Ethernet interface converter (GBIC), a small form-factor pluggable (SFP) transceiver, a ten-gigabit small form-factor pluggable (XFP) transceiver, or the like.

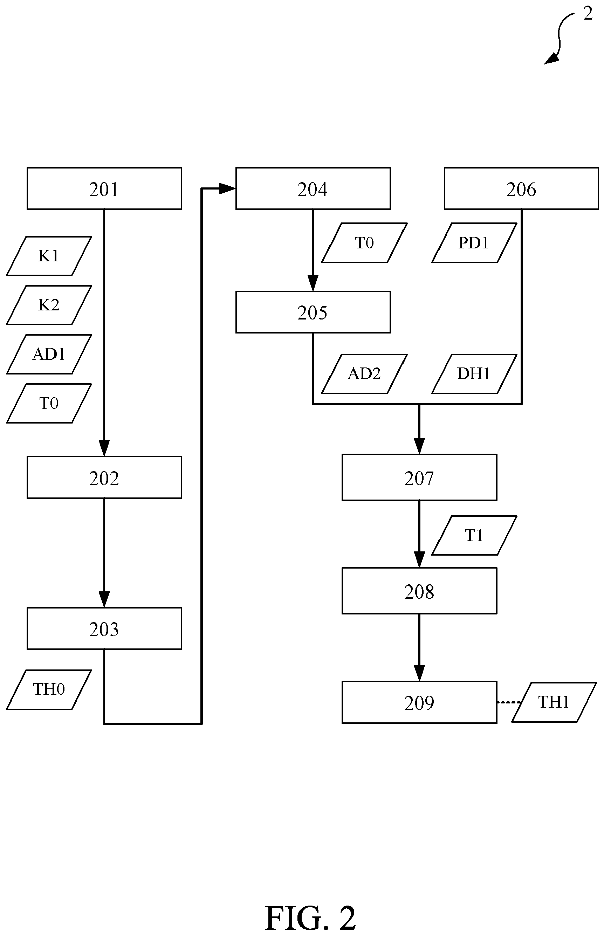

**FIG. 2** depicts a schematic view of a process for securing business data according to one or more embodiments of the present disclosure. The contents shown in **FIG. 2** are only for easily illustrating the embodiments, instead of limiting the scope of the present disclosure.

Please refer to both **FIG. 1** and **FIG. 2****.** A process **2** for securing business data may be executed whenever the user wants to preserve the business data **PD1** as evidence on the blockchain system **1.** Before the beginning of the process **2,** the storage **112** may store a private key **K1** corresponding to a user account that represents the electronic device **11** in the blockchain system **1,** and a public key **K2** corresponding to the user account may be generated based on the private key **K1.** In some embodiments, said public key **K2** may be generated by the processor **111.** An address **AD1** corresponding to the user account in the blockchain system 1 may then be generated based on the public key **K2,** which, in some embodiments, may also be generated by the processor **111.**

The process **2** may begin with an action **201,** in which the processor **111** may generate a contract deployment transaction **T0** based on the private key **K1**, the public key **K2,** and the address **AD1** of the user account, so as to deploy a smart contract **C1** corresponding to the user account. In an action **202,** the processor **111** may sign the contract deployment transaction **T0** with the private key **K1**, and the transceiver **113,** in an action **203,** may deploy the smart contract **C1** by submitting a transaction request **R0** to the blockchain system **1.** A block **B0** comprising the contract deployment transaction **T0** may be generated in the blockchain **10** and the transaction hash **TH0** representing the contract deployment transaction **T0** may be obtained after the transaction request **R0** and the corresponding contract deployment transaction **T0** have been validated, executed, and committed to the blockchain system **1** by a miner (i.e., one of the nodes) therein. The storage **112** may store the transaction hash **TH0**.

Note that the smart contract **C1** shown in **FIG. 1** is only a schematic view instead of a limitation to its quantity or location. Those having ordinary skills in the art shall realize that the smart contract **C1** is, in fact, stored within each valid node of the blockchain system **1** after the action **203.**

When the user of the electronic device **11** wants to submit evidence of the previously-mentioned business action to the blockchain **10,** the transceiver **113,** in an action **204,** may access the block **B0** to reach the contract deployment transaction **T0**. The processor **111** may then obtain an address **AD2** of the smart contract **C1** according to the contract deployment transaction **T0**, which is in an action **205.**

On the other hand, in an action **206,** the processor **111** may generate a private data hash **DH1** according to the business data **PD1.** The business data **PD1** may represent the information that needs to be not only preserved via the blockchain **10** but also kept unavailable for irrelevant users of the blockchain system **1,** since its content usually contains the privacy or confidential information of one or more parties involved in the business action. In some embodiments, the processor **111** may generate the private data hash **DH1** using an SHA-3 algorithm such as Keccak256. In some embodiments, the action **206** may be performed before any of the actions **201-205.**

After obtaining the address **AD2** and the private data hash **DH1,** the processor **111,** in an action **207,** may generate a transaction **T1** for interacting with the smart contract **C1** based on the address **AD2** and the private data hash **DH1,** and sign the transaction **T1** with the private key **K1** in an action **208.** Specifically, for example, the address **AD2** may be included in a recipient field of the transaction **T1**, and the private data hash **DH1** may be included in a data field of the transaction **T1.**

The transceiver **113** may then submit (i.e., via broadcasting) a transaction request **R1** corresponding to the signed transaction **T1** to the blockchain system **1.** Once the transaction request **R1** has been validated, executed, and committed to the blockchain system **1** by a miner, the private data hash **DH1** may be transmitted to the smart contract **C1** as an input to set the variables defined therein upon execution, since it has been specified in the transaction **T1** that the recipient is the smart contract **C1** and the included data is the private data hash **DH1.** A block **B1** comprising the transaction **T1** may be generated in the blockchain **10** and a transaction hash **TH1** representing the transaction **T1** may then be obtained.

More specifically, the smart contract **C1** may be initially programmed via the processor **111** to include a function that catches the input value and assigns it to a variable, such that the private data hash **DH1** can be stored therein upon execution via the transaction **T1.**

With the process **2** for securing business data, the private data hash **DH1** can be successfully stored in the smart contract **C1** as a link to the business data **PD1.** Any valid node in the blockchain system **1** can observe the record of the private data hash **DH1,** but cannot derive the content of the business data **PD1** simply by view of the private data hash **DH1.**

In some embodiments, the processor **111** may alternatively program and deploy the smart contract **C1** as an upgradable smart contract (e.g., by deploying a proxy smart contract, or directly using tools such as "deployProxy" provided by OpenZeppelin). The smart contract **C1** may therefore be upgraded based on the private data hash **DH1** via the transaction **T1.**

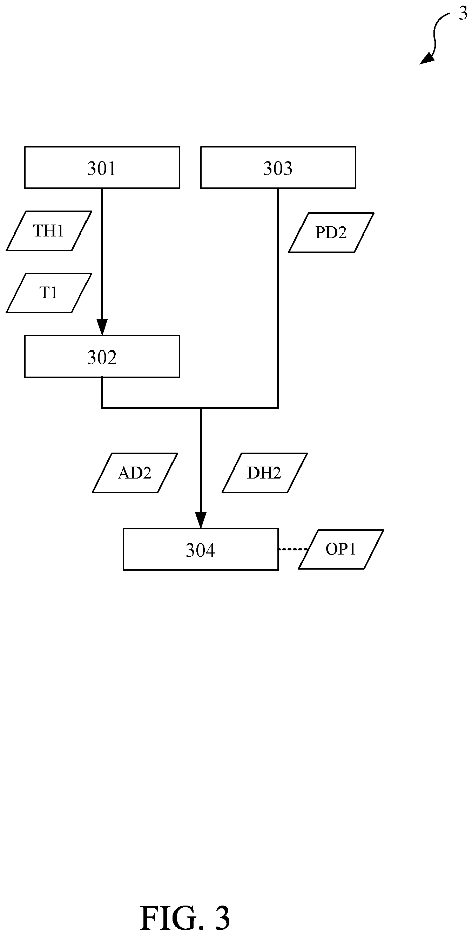

**FIG. 3** depicts a schematic view of a process for verifying business data according to one or more embodiments of the present disclosure. The contents shown in **FIG.** 3 are only for easily illustrating the embodiments, instead of limiting the scope of the present disclosure.

Please refer to **FIG. 1****,** **FIG. 2****,** and **FIG. 3** together. When any individual wants to prove that the business action corresponding to the business data **PD2** is the exact business action corresponding to the business data **PD1,** he/she may provide the transaction hash **TH1** and the business data **PD2** to the electronic device **12** via, for example, the transceiver **123** or other input means. A process **3** for verifying business data may be executed by the electronic device **12** following the process **2** to verify whether the business data **PD2** is consistent with the business data **PD1.** Note that the electronic device **12** may be different with the electronic device **11,** and thus may have zero knowledge about the business data **PD1** since it is kept exclusive to the electronic device **11.** However, the verification mechanism provided by the present disclosure in the process **3** does not require the electronic device **12** to know the content of the business data **PD1.**

The process **3** may begin with an action **301,** in which the processor **121** may reach/visit the transaction **T1** according to the transaction hash **TH1.** The processor **121** in an action **302** may then obtain the address **AD2** of the smart contract **C1** from the transaction **T1.** On the other hand, the processor **121** in an action **303** may generate a private data hash **DH2** according to the business data **PD2** in the same way as the processor **111** generates the private data hash **DH1.** In some embodiments, the action **303** may be performed before the action **301** or the action **302.**

After obtaining the address **AD2** and the private data hash **DH2,** the processor **121,** in an action **304,** may determine whether the private data hash **DH2** is comprised in the smart contract **C1** (the existence of the private data hash **DH2** indicates that the business data **PD2** is the exact business data that was used for generating the transaction **T1** and constructing the block **B1**). The processor **121** may approve the business data **PD2** when determining that the private data hash **DH2** is comprised in the smart contract **C1** since it is almost impossible that the business data **PD1** and **PD2** would result in the same hash value via the same hashing mechanism if the two data are not identical. On the other hand, the business data **PD2** may be disapproved by the processor **121** upon determining that the private data hash **DH2** is not comprised in the smart contract **C1.** It can thus be concluded that the approval/disapproval of business data **PD2** may represent the fact that the two pieces of business data **PD1** and **PD2** are identical/different.

In some embodiments, regarding the action **304,** the processor **121** may first generate a transaction **T2** for interacting with the smart contract **C1** based on the address **AD2** and the private data hash **DH2,** and sign the transaction **T2** with the private key of the corresponding user account of the electronic device **12.** The transceiver **123** may then submit a transaction request **R2** corresponding to the signed transaction **T2** to the blockchain system **1**.

Once the transaction request **R2** has been validated, executed, and committed to the blockchain system **1** by a miner, the private data hash **DH2** may be transmitted to the smart contract **C1** as an input. The smart contract **C1** may then be executed by the processor **121,** and certain functions (e.g., an inquiry/search function) in the smart contract **C1** may be called for checking the existence of the private data hash **DH2** and provide an output message **OP1** indicating the result (i.e., whether the private data hash **DH2** is comprised in the smart contract **C1**). Consequently, a block **B2** comprising the transaction **T2** may be generated in the blockchain **10** and a transaction hash **TH2** representing the transaction **T2** may then be obtained.

To achieve such operations as mentioned above, the smart contract **C1** may, for example, include a function that catches the input value (e.g., the private data hash **DH2)** and compares it with a variable (designed for storing the private data hash **DH1** as previously explained) defined in the same or different function. However, the way for the smart contract **C1** to check the existence of the private data hash **DH2** therein is not limited to such an implementation.

In some embodiments, each of the business data **PD1** and **PD2** may be processed to a JSON file before being further processed to the private data hash **DH1** or **DH2.**

In some embodiments, the processor **121** may determine whether the transaction hash **TH1** was generated based on a private key corresponding to a user account of the blockchain system. Specifically, for example, the storage **122** may further store a public key (e.g., the public key **K2)** corresponding to a certain user account (e.g., the user of the electronic device **11),** and the processor **121** may authenticate the transaction hash **TH1** with the public key to determine whether the transaction hash **TH1** was generated based on the private key (e.g., the private key **K1**) of that user. The processor **121** may approve the business data **PD2** only when determining both that the transaction hash **TH1** was generated based on the certain private key and that the private data hash **DH2** is comprised in the smart contract **C1.**

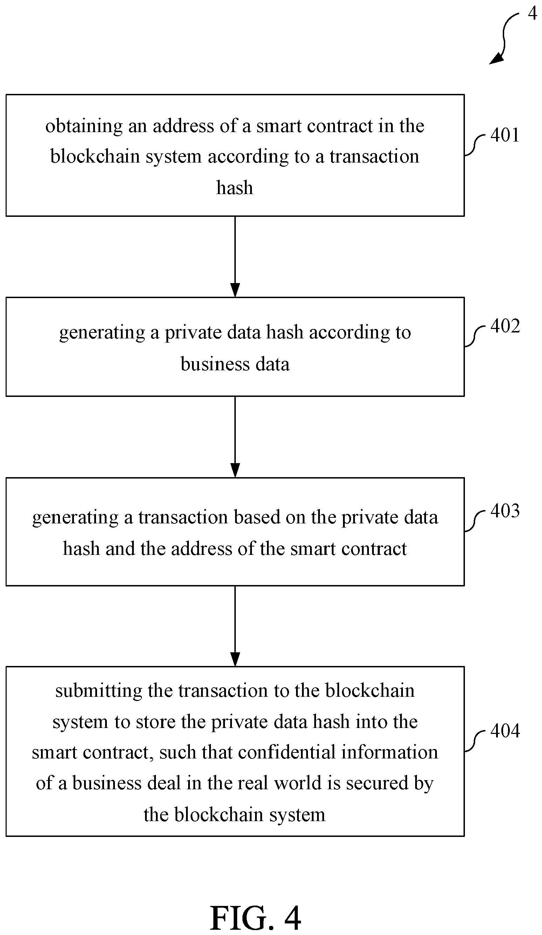

**FIG. 4** depicts a method for securing business data via a blockchain system according to one or more embodiments of the present disclosure. The contents shown in **FIG. 4** are only for easily illustrating the embodiment of the present disclosure, instead of limiting the scope of the present disclosure.

Please refer to **FIG. 4****.** A method **4** for securing business data via a blockchain system may comprise steps performed by an electronic device in the blockchain system as follows:
obtaining an address of a smart contract in the blockchain system according to a transaction hash (labeled as a step **401);**
generating a private data hash according to business data (labeled as a step **402);**
generating a transaction based on the private data hash and the address of the smart contract (labeled as a step **403);** and
submitting the transaction to the blockchain system to store the private data hash into the smart contract, such that confidential information of a business deal in the real world is secured by the blockchain system (labeled as a step **404).**

In some embodiments, the smart contract may correspond to a user account of the blockchain system, and the method **4** may further comprise a step as follows: signing the transaction with a private key of the user account before submitting the transaction to the blockchain system.

In some embodiments, regarding the method **4,** the smart contract may correspond to a user account of the blockchain system, and the method **4** may further comprise steps as follows: generating, by the electronic device, a public key of the user account based on a private key of the user account; generating, by the electronic device, an address of the user account in the blockchain system based on the public key; generating, by the electronic device, a contract deployment transaction based on the private key, the public key, and the address of the user account; and deploying, by the electronic device, the smart contract by submitting the contract deployment transaction to the blockchain system to obtain the transaction hash. Moreover, in some embodiments, the method **4** may further comprise a step as follows: signing the contract deployment transaction with the private key before submitting the contract deployment transaction to the blockchain system.

In some embodiments, regarding the method **4,** the electronic device may generate the private data hash of the business data based on an SHA-3 algorithm. Also in some embodiments, the business data may comprise at least one of a text, an image, an audio, and a video corresponding to the business deal.

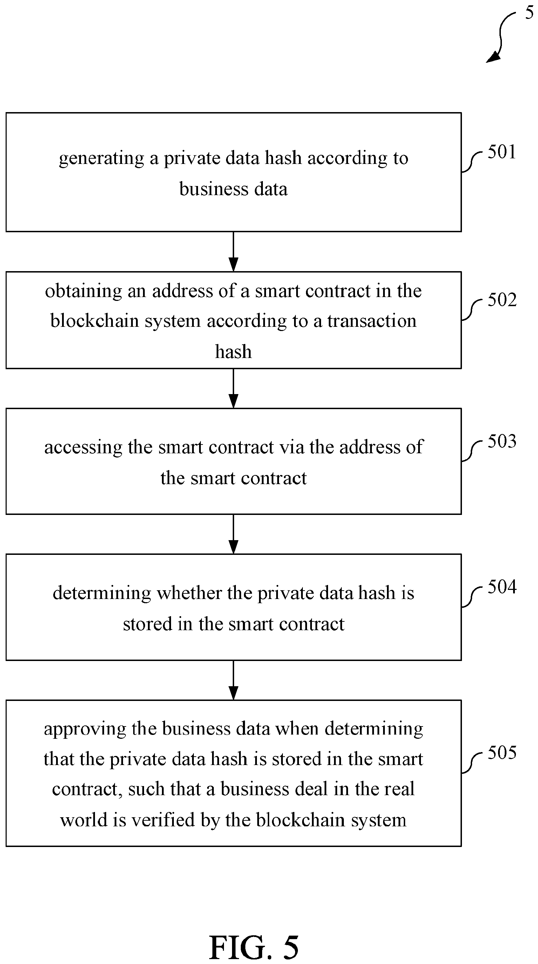

**FIG. 5** depicts a method for verifying business data via a blockchain system according to one or more embodiments of the present disclosure. The contents shown in **FIG. 5** are only for easily illustrating the embodiment of the present disclosure, instead of limiting the scope of the present disclosure.

Please refer to **FIG. 5****.** A method **5** for verifying business data via a blockchain system may comprise steps performed by an electronic device in the blockchain system as follows:
generating a private data hash according to business data (labeled as a step **501);**
obtaining an address of a smart contract in the blockchain system according to a transaction hash (labeled as a step **502);**
accessing the smart contract via the address of the smart contract (labeled as a step **503);**
determining whether the private data hash is stored in the smart contract (labeled as a step **504);** and
approving the business data when determining that the private data hash is stored in the smart contract, such that a business deal in the real world is verified by the blockchain system (labeled as a step **505).**

In some embodiments, the method **5** may further comprise a step as follows: determining whether the transaction hash was generated based on a private key corresponding to a user account of the blockchain system. The electronic device may approve the business data when determining both that the transaction hash was generated based on the private key and that the private data hash is comprised in the smart contract. Moreover, in some embodiments, the electronic device may determine whether the transaction hash was generated based on the private key by authenticating the transaction hash with a public key corresponding to the user account.

In some embodiments, regarding the method **5,** the electronic device may generate the private data hash based on an SHA-3 algorithm. Moreover, in some embodiments, the business data may comprise at least one of a text, an image, an audio, and a video corresponding to the business deal.

Each embodiment of the methods **4** and **5** basically corresponds to a certain embodiment of the electronic device **11** or the electronic device **12** of the blockchain system **1.** Therefore, those of ordinary skill in the art may fully understand and implement all the corresponding embodiments of the methods **4** and **5** simply by referring to the above descriptions of the electronic device **11** or the electronic device **12** of the blockchain system **1,** even though not all of the embodiments of the methods **4** and **5** are described in detail above.

The above disclosure is related to the detailed technical contents and inventive features thereof.

## Claims

1. A device for securing business data via a blockchain system, comprising:
a storage being configured to store business data and a transaction hash;
a transceiver electrically connected with the storage; and
a processor electrically connected with the storage and the transceiver, being configured to:
obtain an address of a smart contract in the blockchain system according to the transaction hash;
generate a private data hash according to the business data; and
generate a transaction based on the private data hash and the address of the smart contract;
wherein the transceiver is configured to submit the transaction to the blockchain system to store the private data hash into the smart contract, such that confidential information of a business deal in the real world is secured by the blockchain system.

2. The device according to claim 1, wherein the smart contract corresponds to a user account of the blockchain system, the storage is further configured to store a private key of the user account, and the processor is further configured to sign the transaction with the private key before submitting the transaction to the blockchain system.

3. The device according to claim 1 or 2, wherein:
the smart contract corresponds to a user account of the blockchain system;
the storage is further configured to store a private key of the user account;
the processor is further configured to:
generate a public key of the user account based on the private key;
generate an address of the user account in the blockchain system based on the public key; and
generate a contract deployment transaction based on the private key, the public key, and the address of the user account; and
the transceiver is further configured to deploy the smart contract by submitting the contract deployment transaction to the blockchain system to obtain the transaction hash.

4. The device according to one of claims 1 to 3, wherein the processor is further configured to sign the contract deployment transaction with the private key before submitting the contract deployment transaction to the blockchain system.

5. A device for verifying business data via a blockchain system, comprising:
a storage, being configured to store business data and a transaction hash;
a transceiver electrically connected with the storage; and
a processor electrically connected with the storage and the transceiver, being configured to:
generate a private data hash according to the business data; and
obtain an address of a smart contract in the blockchain system according to the transaction hash;
wherein the transceiver is configured to access the smart contract via the address of the smart contract, and the processor is further configured to:
determine whether the private data hash is comprised in the smart contract; and
approve the business data when determining that the private data hash is stored in the smart contract, such that a business deal in the real world is verified by the blockchain system.

6. The device according to claim 5, wherein the processor is further configured to determine whether the transaction hash was generated based on a private key corresponding to a user account of the blockchain system, and the processor approves the business data when determining both that the transaction hash was generated based on the private key and that the private data hash is comprised in the smart contract.

7. The device according to claim 5 or 6, wherein the storage is further configured to store a public key corresponding to the user account, and the processor is further configured to authenticate the transaction hash with the public key to determine whether the transaction hash was generated based on the private key.

8. A method for securing business data via a blockchain system, comprising steps performed by an electronic device in the blockchain system as follows:
obtaining an address of a smart contract in the blockchain system according to a transaction hash;
generating a private data hash according to business data;
generating a transaction based on the private data hash and the address of the smart contract; and
submitting the transaction to the blockchain system to store the private data hash into the smart contract, such that confidential information of a business deal in the real world is secured by the blockchain system.

9. The method according to claim 8, wherein the smart contract corresponds to a user account of the blockchain system, and the method further comprises a step as follows: signing the transaction with a private key of the user account before submitting the transaction to the blockchain system.

10. The method according to claim 8 or 9, wherein the smart contract corresponds to a user account of the blockchain system, and the method further comprises steps as follows:
generating a public key of the user account based on a private key of the user account;
generating an address of the user account in the blockchain system based on the public key;
generating a contract deployment transaction based on the private key, the public key, and the address of the user account; and
deploying the smart contract by submitting the contract deployment transaction to the blockchain system to obtain the transaction hash.

11. The method according to one of claims 8 to 10, further comprising a step as follows: signing the contract deployment transaction with the private key before submitting the contract deployment transaction to the blockchain system.

12. A method for verifying business data via a blockchain system, comprising steps performed by an electronic device in the blockchain system as follows:
generating a private data hash according to business data;
obtaining an address of a smart contract in the blockchain system according to a transaction hash;
accessing the smart contract via the address of the smart contract;
determining whether the private data hash is stored in the smart contract; and
approving the business data when determining that the private data hash is stored in the smart contract, such that a business deal in the real world is verified by the blockchain system.

13. The method according to claim 12, further comprising a step as follows:
determining whether the transaction hash was generated based on a private key corresponding to a user account of the blockchain system;
wherein the electronic device approves the business data when determining both that the transaction hash was generated based on the private key and that the private data hash is comprised in the smart contract.

14. The method according to claim 12 or 13, wherein the electronic device determines whether the transaction hash was generated based on the private key by authenticating the transaction hash with a public key corresponding to the user account.
